# EUROPÄISCHE PATENTSCHRIFT

(11) **EP 3 545 271 B1**
(45) Veröffentlichungstag und Bekanntmachung des Hinweises auf die Patenterteilung: **06.04.2022**
(21) Anmeldenummer: 17808826.6
(22) Anmeldetag: 20.11.2017
(51) Int. Cl.: G01F 3/04, G01F 15/10, G01F 3/16

(54) **MESSVORRICHTUNG UND MESSVERFAHREN FÜR KLEINE GASVOLUMEN**
MEASUREMENT APPLIANCE AND MEASUREMENT PROCESS FOR SMALL GAS VOLUMES
APPAREIL DE MESURE ET PROCÉDÉ DE MESURE POUR DES PETITS VOLUMES DE GAZ

(30) Priorität: 23.11.2016 DE 102016122634
(43) Veröffentlichungstag der Anmeldung: 02.10.2019
(73) Patentinhaber: BlueMethano GmbH, 10115 Berlin (DE)
(72) Erfinder: HUTH, Marcus, 10115 Berlin (DE); TÖLLE, Rainer, 10115 Berlin (DE)
(74) Vertreter: Dr. Klemens Schubert Patentanwalt
(86) Internationale Anmeldenummer: PCT/EP2017/079753
(87) Internationale Veröffentlichungsnummer: WO 2018/095854

(56) Entgegenhaltungen:
- WO-A1-92/21941
- WO-A1-2011/083125
- WO-A2-2011/076415
- DE-A1-102009 007 652
- DE-B4-102009 007 652
- US-A1- 2005 217 346

## Beschreibung

Die Erfindung betrifft einen Gasflussmesser und Messverfahren für kleinste Gasvolumenströme, die bei einer Verschiebung kleinster Gasmengen mit sehr geringen Verlusten der Antriebsenergie aus dem Gas selbst auskommt. Die AT 512619 B1 zeigt ein Durchflussmessgerät, mit einem Verdrängerzähler, bei dem in einer Umgehungsleitung ein Druckdifferenzaufnehmer parallel geschaltet ist, wobei ein mit dem Verdrängerzähler drehverbundener Motor (M) abhängig von einem vom Druckdifferenzaufnehmer festgestellten Differenzdruck zwischen Zu- und Abströmseite des Verdrängerzählers zum stetigen Differenzdruck-Ausgleich angesteuert wird und der Druckdifferenzaufnehmer einen in einem Zylinderbereich der Umgehungsleitung frei beweglichen Kolben aufweist. Die durch den Differenzdruck bedingte Auslenkung des Kolbens wird durch einen Magnetfeldsensor gemessen und ein entsprechendes Sensorsignal erzeugt, welches über eine Regeleinheit zu einer Drehzahlanpassung des Motors des Verdrängerzählers verwendet wird.

Aus der DE 31 29 365 C2 ist ein Dosiergerät mit Ventilumschaltung bekannt.

Mit der DE 195 39 551 C2 werden ein Messsystem und ein Messverfahren zur Erfassung der Position eines Kolbens beansprucht, der mit magnetischen Bauteilen und Sensorik zur Erfassung von magnetischen Feldern arbeitet.

In der US 5 456 107 A bzw. der WO 92/21941 A1 wird ein "Modular Gas Flowmeter" beschrieben. Dieses Gerät misst periodisch die Geschwindigkeit des einströmenden Gases. Die Geschwindigkeit wird aus der Bewegung eines sich gegen die Schwerkraft aufwärts bewegenden Kolbens abgeleitet. Der Kolben wird periodisch vom einströmenden Gas aufwärts bewegt. Der dabei zurückgelegte Weg wird durch das Erreichen jeweils einer von vielen Markierungen erfasst.

Die DE 32 24 285 A1 beschreibt ein Durchflussmesssystem mit einem vom Differenzdruck eines Venturirohrs beaufschlagten Messkörper.

Die DE 699 31 787 T2 zeigt eine Vorrichtung und ein Verfahren zur Verabreichung einer vorbestimmten Menge von Tropfen. Darin wird ein Ventilelement aus einem harten Magnetmaterial vorgeschlagen, das durch ein externes Magnetfeld betätigt wird. Dafür wird nur eine Spule benötigt, da nur die Richtung des Stroms umgekehrt werden muss, um das Ventil zu öffnen und zu schließen.

Eine Dosiervorrichtung und Dosierverfahren unter Einsatz von Ferrofluid beschreibt DE 10 2010 000 690 A1.

Die DE 10 2008 024 166 B4 offenbart weiterhin ein Kolben-Zylinderaggregat.

Die EP 12556 B1 schließlich zeigt allgemeine Konstruktionsmerkmale eines "magnetic liquid shaft seal". Hier sind die typischen Verteilungen von Ferrofluid auf permanentmagnetischen Dichtungselementen dargestellt.

Beim derzeitigen Stand der Technik werden damit verfahrenstechnische und vorrichtungstechnische Wege beschritten, bei denen gerade die Effekte des angewandten Verdrängungsprinzips eine relativ hohe Ungenauigkeit bzw. Verfälschung der Messergebnisse zwingend herbeiführen und daher für die hohen Anforderungen an eine genaue, kontinuierliche Messung nicht in Frage kommen.

Der Erfindung liegt die Aufgabe zugrunde, Gasvolumenströme über einen großen Messbereich hinweg möglichst genau zu erfassen und dabei eine Vorrichtung bereitzustellen, welche einfach, skalierbar und im Aufbau konstruktiv variabel an die technischen Aufgabenstellungen der Anwendungsgebiete anpassbar ist. Dabei soll die Messvorrichtung zum Betrieb nur sehr geringe Druckunterschiede zwischen Gasein- und Gasausgang benötigen und deshalb mit sehr geringen Verlusten an Antriebsenergie aus dem Gas selbst auskommen.

Diese Aufgabe wird durch Merkmale des Anspruches 1 gelöst. Vorteilhafte Weiterbildungen der Erfindung sind in den abhängigen Ansprüchen gekennzeichnet.

Die Erfindung betrifft somit einen Gasflussmesser, aufweisend ein lineares Messrohr mit einem Innenvolumen, mit einem Gaseinlass an einem proximalen Ende des Messrohres und mit einem Gasauslass an einem distalen Ende des Messrohres. Zudem ist ein Kolben im Innenvolumen vorgesehen, wobei der Kolben eine mit dem Messrohr abschließende Gasdichtung aus Ferrofluid aufweist und durch einen Kraftangriff wenigstens zwischen Gaseinlass und Gasauslass gasdicht beweglich ist. Des Weiteren ist wenigstens ein Schaltmittel zum Steuern der Bewegung des Kolbens in Richtung auf das proximale Ende des Messrohres und mindestens ein Mittel zur zeitlich wiederholten Lageerfassung des Kolbens im Messrohr sowie eine Auswerteeinheit vorgesehen. Die Auswerteeinheit ist dazu ausgebildet, wenigstens eine Relation zwischen einem Zeitverlauf der Bewegung des Kolbens im Messrohr und der dem Messrohr zugeführte Gasmenge herzustellen und messtechnisch zu bestimmen. Dabei bestehen das Messrohr aus einem nicht-magnetischen Material und der Kolben aus einem permanentmagnetischen Werkstoff mit einem Dipolmoment, das entlang der Achse des Messrohres ausgebildet ist. Zugleich weist der Kolben gegenüber dem Messrohr ein Untermaß, bevorzugt von mindestens 5%; seines Durchmessers auf und besitzt ferner bevorzugt ein Durchmesser- zu Längenverhältnis von mindestens 1 zu 1,4. Dabei umfasst das mindestens eine Mittel zur zeitlich wiederholten Lageerfassung des Kolbens wenigstens einen Magnetfeldsensor angeordnet an einer vorbestimmten Stelle des Messrohres, der wenigstens die Anwesenheit des Kolbens an einer vorbestimmten Stelle des Innenvolumens anzeigt. Auf einfache Weise kann hierdurch das Gasvolumen sehr genau fortlaufend bestimmt werden.

Hierdurch werden die Mängel des Standes der Technik behoben und zudem ist der Aufbau einfach und konstruktiv variabel an die Aufgabenstellungen anpassbar.

Es gelingt der Einsatz in Bereichen der Technik in denen der Nachweis einer Verschiebung kleinster Gasmengen zum Zwecke der Auslösung von Schaltvorgängen realisiert werden soll. Damit können geringste Druckschwankungen regelungstechnisch verarbeitet werden. Durch die vom System gelieferten Dämpfungseigenschaften werden die Schaltvorgänge entprellt und der Nachweis von Gasmengen unter einem Mikroliter kann mit geringem technischem Aufwand realisiert werden. Das eröffnet zum Beispiel der mikrobiologischen Forschung neue Möglichkeiten zur Bestimmung der gasförmigen Stoffwechselprodukte in kleinstem Maßstab. Geringste Druckunterschiede werden messbar, wodurch die Rückwirkungen auf das untersuchte System minimiert werden.

Insbesondere bei der Beobachtung des Gasstoffwechsels von Mikroorganismen in Laborversuchen können sehr geringe Gasströme über lange Zeiträume hinweg auftreten. Das erfordert schon ab dem Nullpunkt des Volumenstroms eine sehr feine Auflösung der Messung des transportierten Gasvolumens. Andererseits reagieren die Messvorrichtung und das Messverfahren auch dann adäquat, wenn sich die Volumenströme über einen kurzen Zeitraum hinweg stark ändern. Um Rückwirkungen auf den laufenden Versuch gering zu halten, kommt das Messverfahren mit einem geringen, gleichbleibenden Druckunterschied zwischen Quelle und Senke aus. Weiterhin wird ein höherer Gasdruck in der Gasquelle unabhängig vom äußeren Luftdruck an den Gasausgang weitergegeben. Damit wird auf der Seite des Gasausgangs ein Gas-Depot zur anschließenden Gasanalyse anschließbar. Um dem Trend zur Miniaturisierung in den Lebenswissenschaften zu entsprechen, kann die Messvorrichtung für sehr kleine Gasbildungsraten auch selbst sehr klein gestaltet werden.

Weiterhin stellt die Messvorrichtung eine hohe Eigensicherheit bereit. So kann es z. B. bei einem Ausfall der Energieversorgung zu einem hohen Druckanstieg in der Gasquelle kommen, auf den das Messgerät sinnvoll reagieren muss. Deshalb wird von der Messvorrichtung außerhalb des angestrebten Bereichs des Arbeitsdrucks auch die Funktion eines Sicherheitsventils erfüllt. Das trifft sowohl auf Überdruck, als auch auf Unterdruck zu. Diese Funktion wird erreicht, indem der Kolben gegenüber dem Messrohr ein solches Untermaß aufweist, das bei einer hohen Druckdifferenz zwischen Gaseingang und Gasausgang das Gas die Kolbendichtung aus Ferrofluid durchbricht. Deshalb kann durch die Wahl der magnetischen Feldstärke des Kolbens und seines Untermaßes die obere und untere Grenze der Druckdifferenz festgelegt werden, bei der die Funktion als Sicherheitsventils aktiviert wird. Für das Untermaß sollte jedoch die Grenze von 5% des Kolbendurchmessers nicht unterschritten werden, da sich sonst die Adhäsionskraft des Ferrofluides stark bremsend auf die Bewegung des Kolbens auswirkt.

Ist das lineare Messrohr so ausgerichtet, dass wenigstens eine von Null verschiedene Komponente einer Schwerkraft des Kolbens auf das proximale Ende des Messrohres gerichtet ist, lässt sich ein Messprozess unter Einsatz der Schwerkraft einfach verwirklichen. Dazu ist insbesondere bei senkrecht stehendem Messrohr erfindungsgemäß ein Durchmesser zu Längenverhältnis des Kolbens von mindestens 1 zu 1,4 vorzusehen. Die für die Bewegung des Kolbens notwendige Druckdifferenz muss größer sein als die Gewichtskraft des Kolbens plus Wandreibung geteilt durch die wirksame Querschnittsfläche des Kolbens. Deshalb wird im Interesse einer geringen Druckdifferenz zwischen Gas-Eingang und Gas-Ausgang die Kolbenlänge gering gewählt.

Gemäß einer vorteilhaften Weiterbildung der Erfindung ist in Kontermagnet mit einer magnetischen Polung entgegengesetzt zu einer magnetischen Polung des Kolbens am distalen Ende des Messrohres angeordnet. Über den verstellbar fest angeordneten Kontermagneten kann der Messprozess auf einfache Weise beeinflusst werden. Wird ein größerer Druck in der Gasquelle gewünscht, ist dieser Druck an der Messeinrichtung einstellbar. Durch entsprechende Auswahl der Feldstärke des Kontermagneten und den eingestellten Abstand zum distalen Ende des Messrohres wird die Höhe der Druckdifferenz zwischen Gaseingang und Gasausgang festgelegt, die für einen vollständigen Zyklus des Messprozesses notwendig ist. Damit kann der Messprozess an die Gasbildungsrate der Gasquelle und die dort gewünschten Druckverhältnisse angepasst werden.

Nach einer anderen nicht erfindungsgemäßen_Ausführungsform ist zumindest eine Einrichtung zur Erzeugung eines Störmagnetfeldes an einem vorbestimmten Störort des Messrohres angeordnet, wobei bei einer Annäherung des permanentmagnetischen Kolbens an den Störort eine Superposition des Störmagnetfeldes und des Magnetfeldes des Kolbens die Gasdichtung aus Ferrofluid durch eine Umverteilung des Ferrofluids aufhebt. Hierdurch kann ebenfalls der Messprozess auf einfache Weise gesteuert werden. Vorzugsweise hält dabei das Störmagnetfeld den permanentmagnetischen Kolben bei einer definierbaren Annäherung an den Störort fest. Insbesondere ist die zumindest eine Einrichtung zur Erzeugung eines Störmagnetfeldes schaltbar oder regelbar ausgebildet und die zumindest eine Einrichtung zur Erzeugung eines Störmagnetfeldes entlang des linearen Messrohres bewegbar gelagert.

Dabei kann die Bewegung der zumindest einen Einrichtung zur Erzeugung eines Störmagnetfeldes durch einen Stellantrieb erfolgen, wobei auch eine Längenbestimmung des Stellweges erfolgt. Möglich ist es auch, dass bei Bewegung der Einrichtung zum Erzeugen eines Störmagnetfeldes der Kolben mitbewegt wird. Da das Störmagnetfeld sowohl den Kolben festhält als auch die Gasdichtung des Ferrofluides aufhebt, kann der Kolben ohne Druckdifferenz auf seiner Ober- und Unterseite im Messrohr bewegt werden. Gemäß dieser Ausführungsform sind die Einrichtung zur Erzeugung des Störmagnetfeldes und wenigstens ein Magnetfeldsensor unter Beibehaltung einer vorbestimmten Lage zueinander gemeinsam beweglich ausgebildet. Dadurch kann der Magnetfeldsensor sowohl das Magnetfeld des Kolbens als auch die Superposition mit dem Störmagnetfeld erfassen und so die Messwerte zur Regelung des Störmagnetfelds bereitstellen.

Die Erfindung betrifft somit eine Messvorrichtung für kleine Gasvolumen und ein damit realisiertes Messverfahren bestehend aus einem Messrohr, das aus einem Material mit sehr geringer magnetischer Suszeptibilität gebildet ist. Der in das Rohr eingesetzte Kolben weist einen geringeren Durchmesser als die Rohrbohrung auf und besteht aus permanentmagnetischem Material mit einem permanenten Magnetfeld in axialer Richtung. Der Raum zwischen Messrohrwand und Kolben ist mit einer magnetisierbaren Flüssigkeit gefüllt. Dafür wird insbesondere ein Ferrofluid verwendet. Bis zu einem bestimmten Verhältnis von Durchmesser zu Gewicht wird ein solcher permanentmagnetischer Kolben in einem Führungsrohr mit einem etwas größeren Durchmesser auf seiner Mantelfläche vollständig vom Ferrofluid umflossen. Dadurch wird der Kolben von durch die magnetische Flüssigkeit übertragenen Kräften im Führungsrohr zentriert, weshalb der Kolben keine Berührung mit der Wand des Rohres aufweist. Deshalb treten nur geringe Reibungskräfte zwischen Kolben und Messrohr auf. Diese Zentrierung kann bei ausreichender magnetischer Feldstärke des Kolbens auch gegen die Schwerkraft erreicht werden. Deshalb bewegt sich der Kolben auch in horizontaler Richtung schon bei geringen Druckunterschieden auf beiden Seiten des Kolbens bis der Druckausgleich weitgehend abgeschlossen ist. Steht das Führungsrohr senkrecht, muss zur Bewegung des Kolbens ein Gasdruck aufgebaut werden. Der zum Start der Bewegung notwendige Druck liegt nur sehr wenig über dem, der sich rechnerisch aus der Kolbenquerschnittsfläche multipliziert mit der Gewichtskraft des Kolbens ergibt. Hat sich der Kolben in Bewegung gesetzt, ist für die weitere Aufwärtsbewegung nur noch ein Zustrom von Gas aus der Quelle, aber kaum weiterer Druckanstieg mehr nötig. Damit kann bei senkrecht stehendem Führungsrohr unter dem Kolben Gas entnommen werden ohne dass sich der Gasdruck in der Quelle ändert. Damit können die Druckschwankungen in der Gasquelle während des Messzyklus sehr gering gehalten werden und der Einfluss des Gasvolumens der Quelle auf den Messvorgang reduziert sich gegenüber vorbeschriebenen Anordnungen deutlich.

Außerhalb des Rohres sind ein oder mehrere Magnetfeldsensoren in einer solchen Entfernung angebracht, dass sie das Magnetfeld des Kolbens erfassen. Aus den magnetischen Messwerten kann auf die Position des Kolbens im Rohr geschlossen werden. Mit jeder Änderung der Position des Kolbens geht eine Änderung des Gasvolumens im Rohr einher, die auf diese Art und Weise gemessen werden kann. Durch die Ausbildung nach der Erfindung können nicht nur Messaufgaben, welche die Erfassung der Anzahl vollständiger Messzyklen erfordern, gelöst werden, sondern auch Teilvolumen in Verdrängungszählern bestimmt werden. Beispielsweise kann dies auch durch eine Vielzahl von schaltenden Sensoren entlang der Messstrecke oder einem analog messenden Sensor realisiert werden. Ist die Messaufgabe nicht zeitkritisch kann nach Stand der Technik auch mit nur einem beweglichen Sensor, von dem die jeweilige aktuelle Position bekannt ist, gearbeitet werden. Bei dem erfindungsgenäßen Gasflussmesser und Messverfahren für kleinste Gasvolumen handelt es sich somit um ein mechanisch-volumetrisches Durchflussmessverfahren, das nach dem bekannten Prinzip des Verdrängungszählers arbeitet. Es kommt ein Kolben zum Einsatz, der sich in einem Führungsrohr bewegt. Aus der periodisch ausgeführten Kolbenbewegung wird auf das bewegte Gasvolumen geschlossen. Die jeweils erreichten Kolbenpositionen werden entsprechend dem Stand der Technik mit am Messrohr angebrachten Magnetfeldsensoren erfasst.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen. In der Beschreibung, in den Ansprüchen und in der Zeichnung werden die in der unten aufgeführten Liste der Bezugszeichen verwendeten Begriffe und zugeordneten Bezugszeichen verwendet.

Die Figuren 1a bis f zeigen ein erstes Ausführungsbeispiel eines erfindungsgemäßen Gasflussmessers und eines Verfahrens zur Bestimmung des Volumens eines von einer Gasquelle je Zeiteinheit gelieferten Gases. Dabei wird durch ein senkrecht stehendes Führungsrohr die Rückstellung des Kolbens durch seine Gewichtskraft angetrieben, was vorteilhaft zum Entleeren des Gasraumes genutzt werden kann.

Die Figuren 2a bis f zeigen ein nicht erfindungsgemäßes Beispiel eines Gasflussmessers und eines Verfahrens zur Bestimmung des Volumens eines sich in einer Gasquelle bildenden Gases. Dabei wird für die Rückstellung des Kolbens ein Störmagnetfeld benutzt.

Die Figuren 3a bis d zeigen ein nicht erfindungsgemäßes Beispiel eines Gasflussmessers und eines Verfahrens, bei dem das Volumen eines sich in einem Gefäß bildenden Gases kontinuierlich bestimmt wird und das Gas zur Analyse seiner Bestandteile in einen Analysator geleitet wird.

Die Figuren 4a bis e zeigen ein zweites Ausführungsbeispiel eines erfindungsgenäßen Gasflussmessers und eines Verfahrens, wobei bei senkrecht stehendem Führungsrohr neben der Gewichtskraft des Kolbens auch eine magnetische Kraft für dessen Rückstellung in die Ausgangsposition zur Verfügung steht.

Alle im Folgenden beschriebenen Ausführungsbeispiele zeigen jeweils einen Gasflussmesser 100. Dieser ist mit einem linearen, vertikal ausgerichteten Führungsrohr 1, auch Messrohr genannt, versehen. Das Führungsrohr 1 begrenzt dabei ein Innenvolumen 1f und ist mit einem Gaseinlass 1a an einem proximalen Ende 1b des Führungsrohres 1 versehen. An einem distalen Ende 1d des Führungsrohres 1 ist ein Gasauslass 1c vorgesehen. Ein Kolben 2 ist im Innenvolumen 1f angeordnet, wobei der Kolben 2 eine mit dem Führungsrohr 1 abschließende Gasdichtung aufweist, welche durch Ferrofluid 3 gebildet ist. Der Kolben ist zwischen Gaseinlass 1a und Gasauslass 1c gasdicht beweglich gelagert. Des Weiteren sind Schaltmittel 4 zum Steuern der Bewegung des Kolbens 2 in Richtung auf das proximale

Ende 1b des Führungsrohres 1 vorgesehen, auf welche weiter unten im Detail noch eingegangen wird. Zudem sind ein Magnetfeldsensor 9 oder zwei Magnetfeldsensoren 8, 9 zur zeitlich wiederholten Lageerfassung des Kolbens 2 im Führungsrohr 1 vorgesehen, welche mit einer Auswerteeinheit 17 zusammenwirken. Die Auswerteeinheit 17 stellt wenigstens eine Relation zwischen einem Zeitverlauf der Bewegung des Kolbens 2 im Führungsrohr 1 und der dem Führungsrohr 1 zugeführten Menge an Gas 5 her und bestimmt diese messtechnisch. Das Führungsrohr 1 ist aus einem nichtmagnetischen Material gebildet. Der Kolben 2 ist permanentmagnetisch mit einem Dipolmoment entlang der Achse 1e des Führungsrohres 1 ausgebildet. Der Magnetfeldsensor 9 oder die Magnetfeldsensoren 8, 9 sind an einer vorbestimmten Stelle des Führungsrohres 1 angeordnet, die wenigstens die Anwesenheit des Kolbens 2 an der vorbestimmten Stelle des Innenvolumens 1f anzeigt.

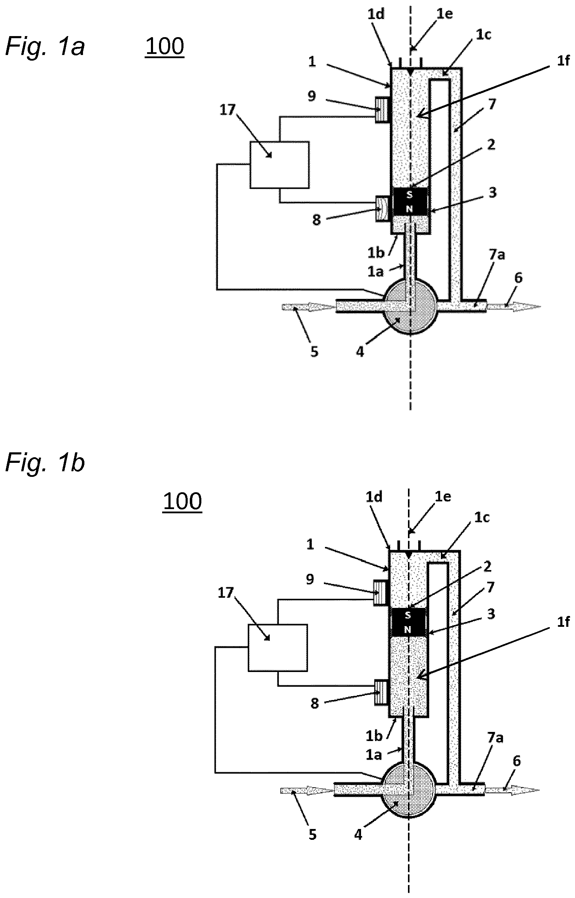

In dem in Fig. 1a bis 1f gezeigten ersten Ausführungsbeispiel des erfindungsgemäßen Gasflussmessers 100 wird das Volumen eines von einer Gasquelle je Zeiteinheit gelieferten Gases 5 bestimmt und das gemessene Gas 6 danach über den Auslass 7a abgegeben. Während der Messung wird das Gas 5 durch ein 3-Wege-Ventil 4 abwechselnd in das Führungsrohr 1 ein- und ausgelassen, wodurch sich der permanentmagnetische Kolben 2 periodisch auf- und abwärts bewegt. Erfindungsgemäß wird der Druck in der Gasquelle konstant gehalten, indem zwischen Gaseinlass 1a und Gasauslass 7a umgeschaltet wird, bevor der Kolben 2 seine mechanischen Endanschläge erreicht. Der Ablauf einer einzelnen Messung ist in den Abbildungen 1a bis 1f dargestellt.

Fig. 1a zeigt, wie der Kolben 2 am unteren Magnetfeldsensor 8 angekommen ist, wodurch das 3-Wege-Ventil 4 auf Einlass geschaltet wurde. Mit steigendem Druck des Gases 5 wird der permanentmagnetische Kolben 2 sukzessive angehoben und gleichzeitig Gas 6 aus dem Raum über dem Kolben durch einen Überströmkanal 7 in Richtung Auslass 7a verdrängt, siehe

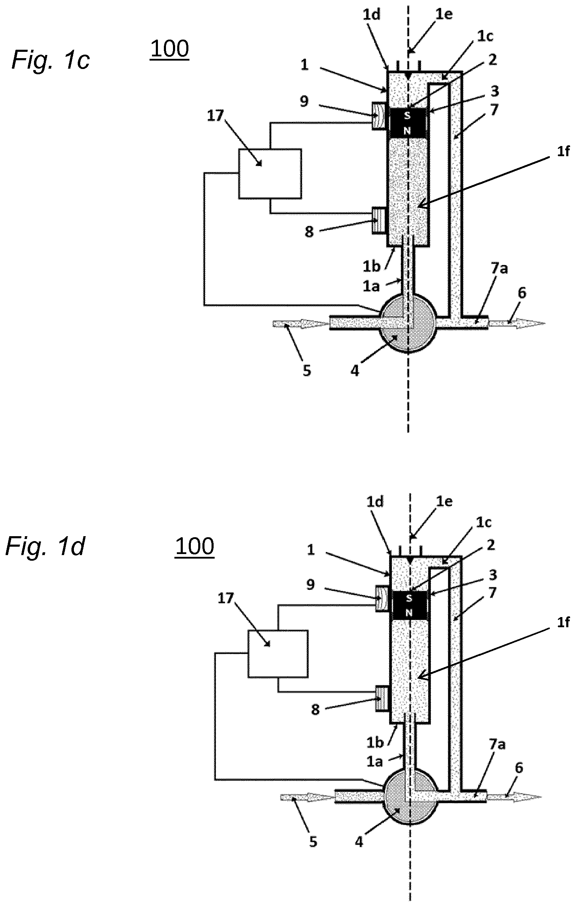

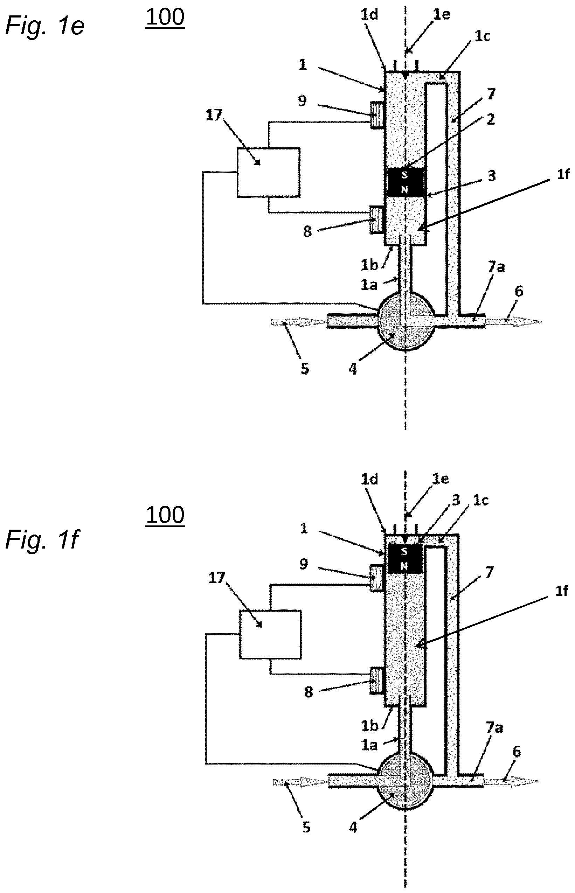

Fig. 1b. In Fig. 1c wird dies fortgesetzt bis der Kolben 2 vom oberen Magnetfeldsensor 9 erfasst wird. In dieser oberen Position des Kolbens schaltet das Ventil 4 um und der Raum über und unter dem Kolben 2 wird mit dem Auslass 7a verbunden, siehe Fig. 1d. Dadurch erfolgt ein Druckausgleich zwischen den Räumen ober- und unterhalb des Kolbens 2 und dieser bewegt sich dann durch sein Eigengewicht nach unten. Der beim Füllen durch das Eigengewicht des Kolbens aufgebaute Gasdruck entspannt sich durch ausströmendes Gas 6, siehe Fig. 1e. Gleichzeitig wird in den Raum über dem sinkenden Kolben 2 ein Teil des Gases 6 eingesaugt. Nähert sich der Kolben 2 seinem tiefsten Arbeitspunkt wird er vom unteren Magnetfeldsensor 8 erfasst. Daraufhin wird das 3-Wege-Ventil 4 auf Einlass geschaltet und der Mess-Zyklus beginnt von neuem. Da sich der Kolben 2 fast reibungsfrei im Führungsrohr 1 bewegt, muss durch das einströmende Gas 5 nur so viel Druck aufgebaut werden, wie durch die Gewichtskraft des Kolbens 2 auf seiner Querschnittsfläche erzeugt wird. Deshalb bleibt der Gasdruck während der Aufwärtsbewegung des Kolbens 2 nahezu konstant und der zurückgelegte Weg des Kolbens 2 ist ein gutes Maß für das während des Messzyklus eingeströmte Gas 5. Durch den Überströmkanal 7 sind die Druckverhältnisse im Führungsrohr 1 unabhängig vom Umgebungsdruck und ein sich erhöhender Druck am Gaserzeuger kann auf den Gasausgang übertragen werden, obwohl zu keinem Zeitpunkt Gaseingang und Gasausgang direkt miteinander verbunden sind. Diese Anschaltung des 3-Wege-Ventils stellt gleichzeitig sicher, dass der zur Anhebung des Kolbens 2 notwendige Gasdruck in der Gasquelle erhalten bleibt, sodass nach erneutem Umschalten des 3-Wege-Ventils die Kolbenbewegung sofort beginnen kann. Andererseits kann es beispielsweise bei Stromausfall zu starkem Überdruck in der Gasquelle kommen. Die Abbildung 1f zeigt den Fall von starkem Überdruck in der Gasquelle, in dem der Gasflussmesser 100 die Funktion eines Sicherheitsventils erfüllt. Das aus dem Spalt zwischen Kolben 2 und Messrohr 1 verdrängte Ferrofluid 3 haftet weiterhin auf der Oberseite des Kolbens 2 und wird bei Erreichen des Arbeitsdruckes von den magnetischen Kräften wieder in den Spalt gezogen wodurch die Dichtung wiederhergestellt wird.

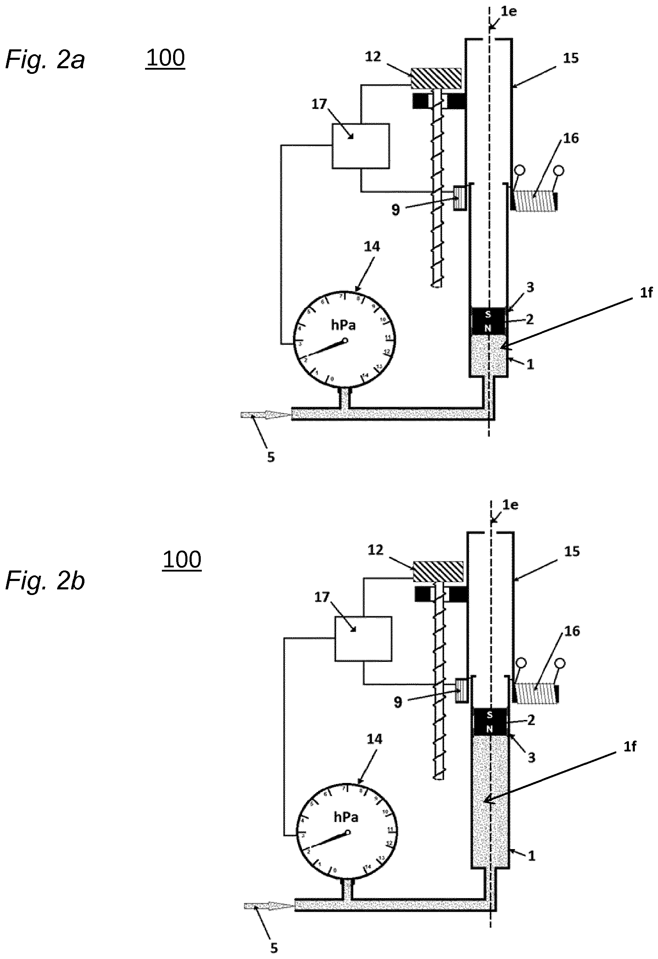

In den Figuren 2a bis 2f ist jeweils ein Beispiel für einen nicht erfindungsgemäßen Gasflussmesser und eines Verfahrens zur Bestimmung des sich in einem Gefäß bildenden Gasvolumens dargestellt, wobei für die Rückstellung des Kolbens ein Störmagnetfeld benutzt wird.

Dazu wird das zuströmende Gas 5 in die nachfolgend beschriebene Messanordnung eingeleitet. In Fig. 2a sind das Führungsrohr 1 und der permanentmagnetische Kolben 2 wieder senkrecht ausgerichtet und der Koben innerhalb des Führungsrohrs 1 angeordnet. In dieser Anordnung wird das Gewicht des in Ferrofluid 3 gelagerten Kolbens 2 von der aus dem Gasdruck resultierenden Kraft getragen und der Kolben 2 bewegt. Das wird in diesem Ausführungsbeispiel am Druckmessgerät 14 veranschaulicht. Unterhalb des sich aufwärts bewegenden Kolbens 2 sammelt sich das zu messende Gas 5 im Führungsrohr 1. Das weiter zuströmende Gas 5 bewegt den Kolben 2 nach oben. Der Gasdruck bleibt über den Weg des Kolbens 2 hinweg annähernd konstant, siehe Fig. 2b.

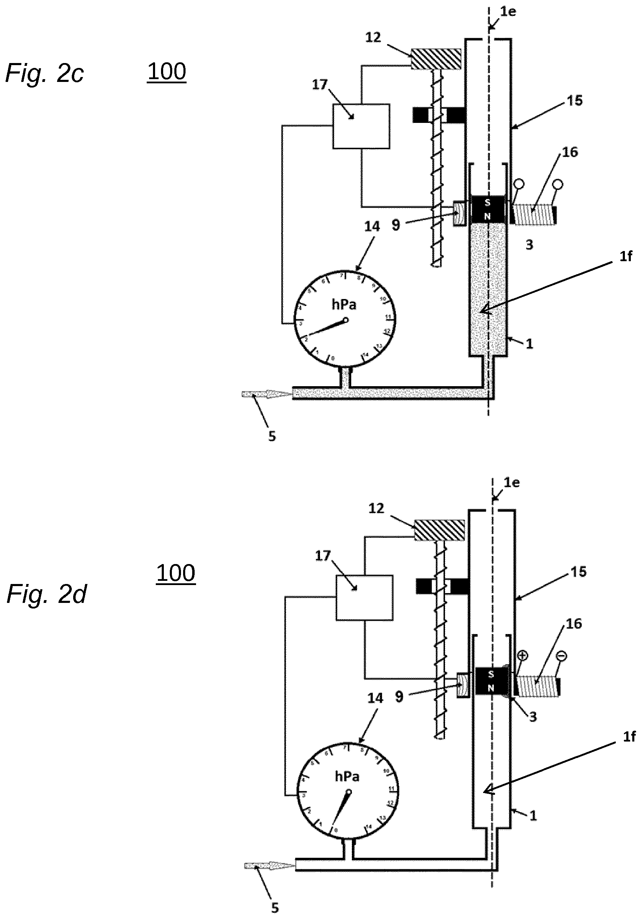

Nachfolgend zu einem beliebigen Zeitpunkt, spätestens jedoch wenn der Kolben 2 in die Höhe des Magnetfeldsensors 9 kommt, wird das bewegliche Überrohr 15, an dem der Magnetfeldsensor 9 und der Elektromagnet 16 befestigt sind, durch den Antrieb mit Wegmessung 12 so weit verfahren, bis der Magnetfeldsensor 9 auslöst und sich der Elektromagnet 16 auf der Höhe des Kolbens 2 befindet. Diese von der Wegmessung des Antriebs 12 ermittelte Position wird als Ausgangspunkt der Volumenmessung gespeichert, siehe Fig. 2c. Der Magnetfeldsensor 9, der Antrieb 12 mit der Wegmessung und wahlweise auch das Druckmessgerät wirken mit der Auswerteeinheit 17 zusammen. Fig. 2d zeigt, wie an diesem Ausgangspunkt der Volumenmessung der Elektromagnet 16 eingeschaltet wird. Die Stromstärke ist so bemessen, dass sich in dem einseitig einwirkenden Magnetfeld des Elektromagneten das Ferrofluid 3 auf der Seite des Elektromagneten 16 konzentriert und damit die Dichtwirkung des Kolbens 2 aufgehoben wird. Diese Wirkung des Elektromagneten 16 kann bei Bedarf mit dem Magnetfeldsensor 9 überprüft werden. Im Führungsrohr 1 kommt es zum Druckausgleich mit der freien Atmosphäre, ersichtlich am Drucksensor 14, da das Gas am Kolben 2 vorbei entweicht. Trotz Druckausgleich verbleibt der Kolben 2 an seiner Position, da er vom Magnetfeld des Elektromagneten festgehalten wird.

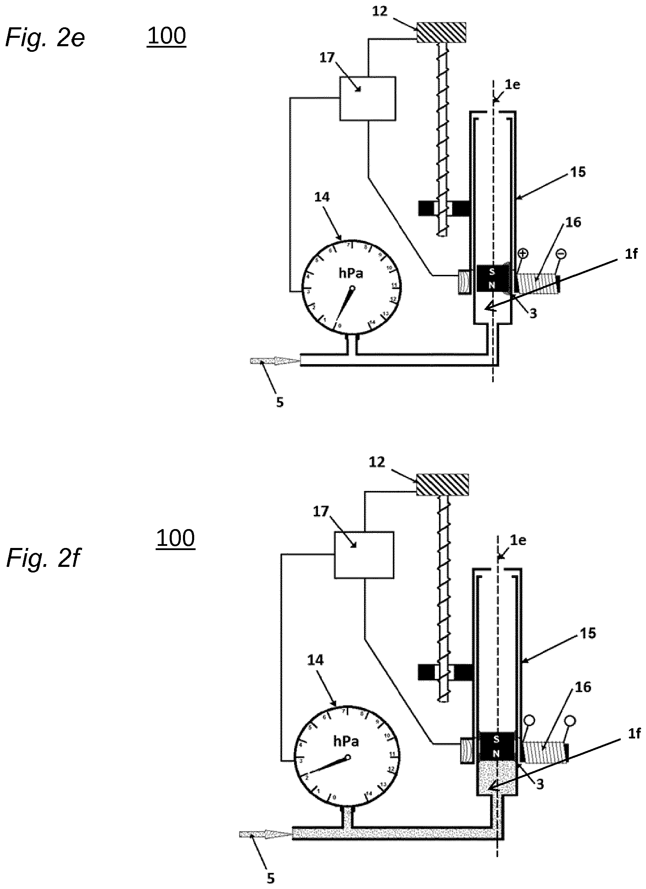

Mit eingeschaltetem Elektromagnet 16 und damit aufgehobener Dichtwirkung des Ferrofluides 3 am Kolben 2 bewegt der Antrieb mit Wegmessung 12 das bewegliche Überrohr 15 weiter nach unten. Dabei wird der Kolben 2 ohne Druckaufbau im Führungsrohr 1 in die untere Ausgangslage gebracht, siehe Fig. 2e. Aus der Geometrie des Führungsrohres 1 und der Wegmessung am Antrieb 12 kann mittels der Auswerteeinheit auf das ursprünglich unter dem Kolben 2 vorhandene Gasvolumen geschlossen werden. In Fig. 2f. wird der Elektromagnet 16 in der unteren Ausgangslage abgeschaltet. Damit stellt sich anschließend die Dichtheit wieder her, da das Magnetfeld des Kolbens 2 für eine erneute Gleichverteilung des Ferrofluides 3 auf der Oberfläche des Kolbens 2 sorgt. Das bewegliche Überrohr 15 wird in die obere Stellung verfahren, ohne dass der Kolben 2 seine Position verändert. Mit Herstellung der Dichtheit baut sich der Druck im zuströmenden Gas 5 wieder unter dem Kolben 2 auf und der nächste Messzyklus beginnt.

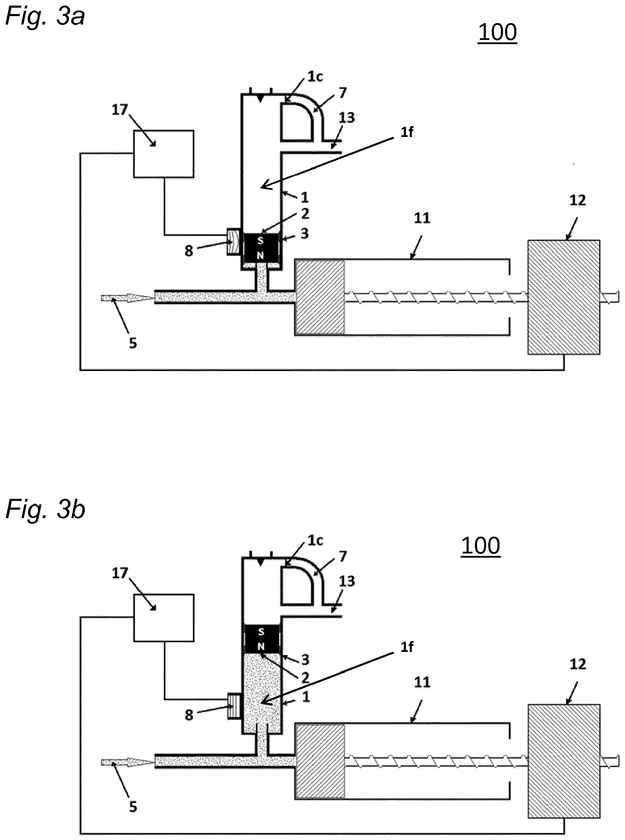

In Fig. 3a bis 3d ist ein Beispiel für einen nicht erfindungsgemäßen Gasflussmesser 100 gezeigt, bei dem das Volumen eines sich in einem Gefäß bildenden Gases kontinuierlich bestimmt und das Gas 5 zur Analyse seiner Bestandteile in einen Analysator geleitet wird. Dabei übernehmen der magnetische Kolben 2 und ein Ausströmkanal 13 die Funktion eines Auslassventils.

In Fig. 3a muss das einströmende Gas 5 einen Druck aufbauen, der die Gewichtskraft des magnetischen Kolbens 2 auf seiner Querschnittsfläche kompensiert. In Fig. 3b ist ein genügend hoher Druck aufgebaut mit dem sich der magnetische Kolben 2 bei sehr geringem Druckanstieg durch das nachströmende Gas 5 nach oben bewegt. Dabei schwächt sich das vom Magnetfeldsensor 8 detektierte Signal ab.

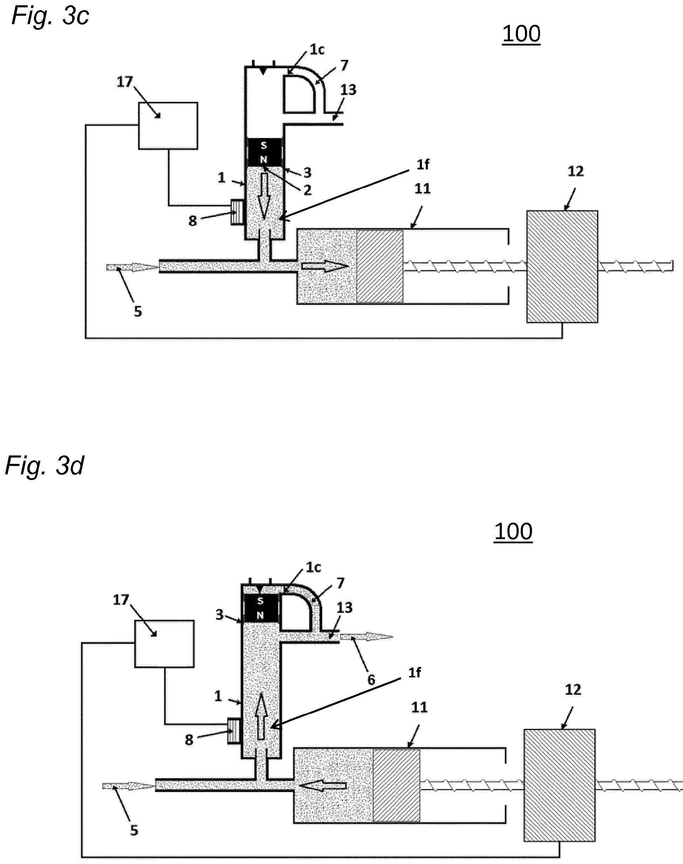

In Fig. 3c hat der Kolben 2 eine bestimmte, definierte Höhe erreicht. Der Antrieb 12 der Spritze 11 beginnt zu arbeiten und die Spritze 11 saugt Gas 5 an. Dadurch wird der magnetische Kolben 2 wieder in die Ausgangsstellung gebracht. Da der magnetische Kolben 2 fast reibungsfrei läuft, ändert sich der Druck im Gaserzeuger nur minimal.

In Fig. 3d wird das Gas 5 aus der gefüllten Spritze 11 dem Analysator zugeführt. Dabei entleert der Antrieb 12 die Spritze 11 in Richtung Führungsrohr 1 mit magnetischem Kolben 2. Dadurch steigt der magnetische Kolben 2 so hoch, dass ein im oberen Teil des Führungsrohrs 1 angeordneter Ausströmkanal 13 unter dem Boden des Kolbens 2 freigegeben wird. Durch diesen Ausströmkanal 13 gelangt das Gas 6 zum nicht dargestellten Analysator. Da das Ferrofluid 3 vom magnetischen Feld des permanentmagnetischen Kolbens 2 gehalten wird, kann nur das Gas entweichen, das Ferrofluid 3 verbleibt am Kolben 2. Ist die Spritze 11 vollständig entleert, kehrt der Antrieb 12 die Arbeitsrichtung kurzzeitig um und bringt damit den magnetischen Kolben 2 wieder in seine Arbeitsposition. Aus der Wegmessung des Antriebs 12 kann jederzeit auf die gebildete und in der Spritze 11 gespeicherte Gasmenge geschlossen werden. In dieser Ausführung können mehrere Ausströmkanäle 13 miteinander zu einer gemeinsamen Ausgangsleitung verbunden werden, ohne dass sich die Messungen gegenseitig beeinflussen. Denn befindet sich der Kolben 2 bei Freigabe des Ausströmkanals 13 am oberen mechanischen Anschlag, verhindert der Gaseintritt in den Ausströmkanals 13 dieser so geöffneten Messanordnung durch Druckerhöhung in der gemeinsamen Ausgangsleitung den Gasaustritt an allen anderen Messanordnungen. Auch bietet diese Ausführung die Möglichkeit, das Führungsrohr 1 horizontal anzuordnen. In der horizontalen Anordnung muss von der Gasquelle nur ein sehr geringer Überdruck aufgebaut werden, um den Kolben 2 vorwärts zu bewegen. Die Energie für die Rückwärtsbewegung des Kolbens 2 stammt in diesem Fall aus einem relativen Unterdruck am Gaseinlass 1a, der periodisch von der Spritze 11 angelegt wird. Wird das Führungsrohr 1, der Kolben 2 und die Spritze 11 klein ausgeführt, können Gasmengen in der Größenordnung von Mikrolitern gemessen werden.

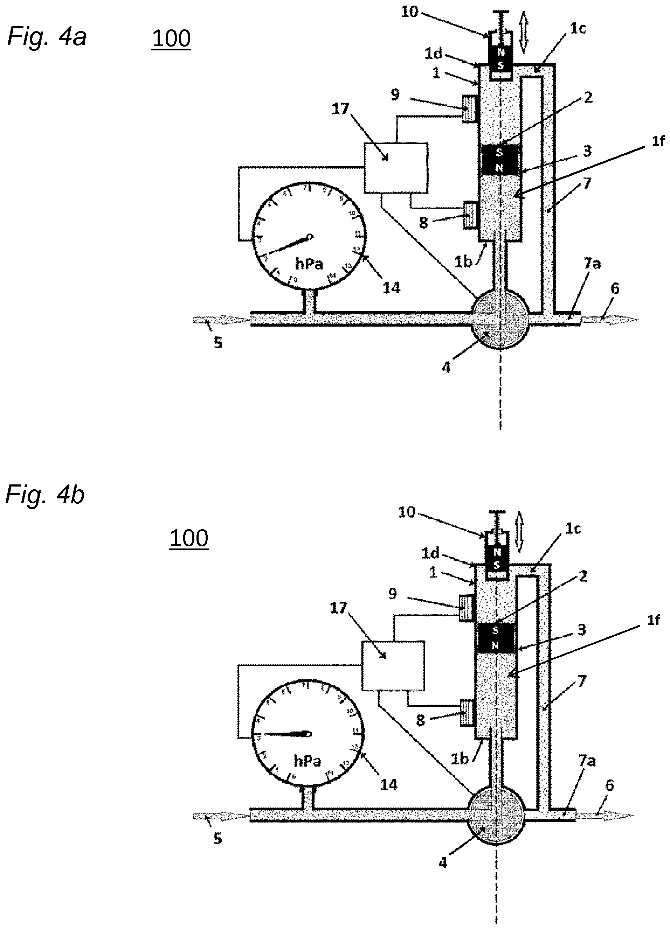

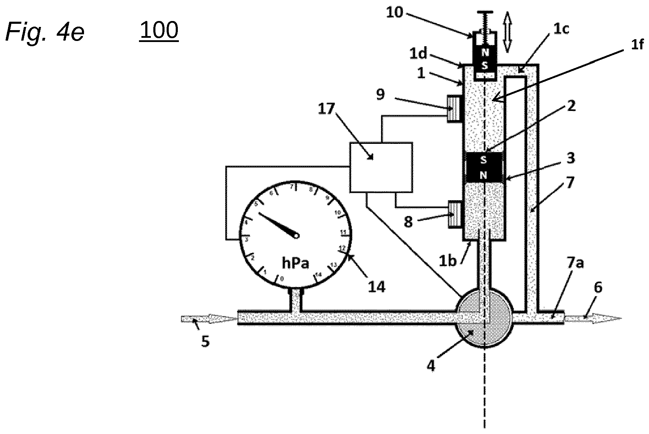

In Fig. 4a bis 4e ist ein Beispiel für einen erfindungsgenäßen Gasflussmesser 100 ähnlich der Fig. 1 gezeigt, wobei bei senkrecht stehendem Führungsrohr neben der Gewichtskraft des Kolbens 2 auch eine magnetische Kraft für dessen Rückstellung in die Ausgangsposition zur Verfügung steht. Die Rückstellung des Kolbens 2 wird neben einer geringen Wandreibung auch vom Strömungswiderstand im Überströmkanal 7 verzögert. Dauert bei hohen Volumenströmen des Gases 5 die Rückstellung des Kolbens 2 länger als sein Anstieg, hat die für die Rückstellung notwendige Zeit großen Einfluss auf den maximal messbaren Volumenstrom. Deshalb wird erfindungsgemäß vorgeschlagen, eine zusätzliche Magnetkraft auf den Kolben 2 wirken zu lassen, was im folgenden Beispiel ausgeführt wird.

In den Fig. 4a bis 4e ist eine weitere Ausführungsform der Erfindung dargestellt. Im ersten Messzyklus steigt der Kolben 2 nach Öffnen des 3-Wege-Ventils 4 angetrieben vom geringstmöglichen Druck, welcher sich aus der Gewichtskraft des in Ferrofluid 3 gelagerten Kolbens 2 multipliziert mit der Kolbenquerschnittsfläche ergibt, siehe Fig. 4a. Kommt der Kolben 2 in die räumliche Nähe eines am distalen Ende 1d des Führungsrohrs 1 angeordneten Kontermagneten 10 und wirkt dessen Magnetfeld der Bewegung des Kolbens 2 entgegen. Dadurch baut sich bei weiterer Aufwärtsbewegung im Führungsrohr 1 unter dem Kolben 2 ein messbar höherer Druck auf, siehe Fig. 4b. Der Gasdruck steigt mit dem weiteren Aufsteigen des Kolbens 2 progressiv an bis das Magnetfeld am Magnetfeldsensor 9 zu einem Schaltvorgang führt. Die zu diesem Zeitpunkt im Magnetfeld zwischen Kolben 2 und Kontermagnet 10 gespeicherte Energie bewirkt eine schnellere Abwärtsbewegung des Kolbens 2 als sie allein aus der Gewichtskraft des Kolbens 2 zu erreichen wäre. Dadurch wird unter anderem eine erhöhte Messfrequenz möglich.

Wird ein kontinuierlicher Zufluss von Gas in die Messanordnung angenommen, verlangsamt sich die Kolbenbewegung unter dem Einfluss des magnetischen Gegenfeldes eines Kontermagneten 10 mit steigender Höhe im Führungsrohr 1, wodurch in der Umgebung des Magnetsensors 9 mehr Zeit für die Positionsbestimmung des Kolbens 2 zur Verfügung steht. Das hilft insbesondere bei einer hohen Messfrequenz den aus der Geschwindigkeit des Kolbens 2 resultierenden dynamischen Messfehler gering zu halten.

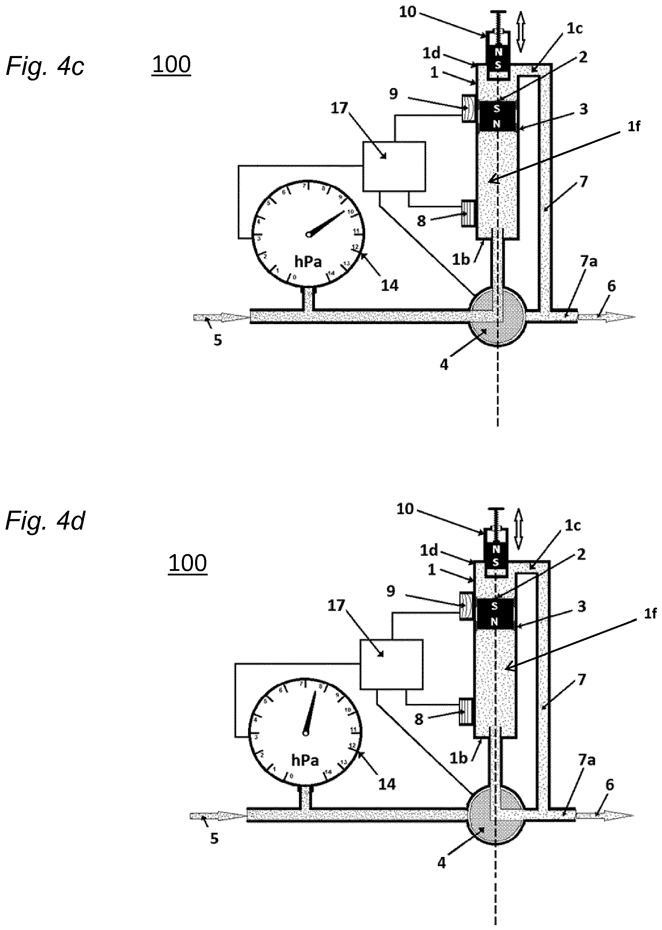

Die Höhe des maximalen Druckes im zuströmenden Gas 5 kann durch Verstellen der Position des Kontermagneten 10 festgelegt werden, siehe Fig. 4c. In Fig. 4d ist gezeigt, wie sich nach dem Umschalten des 3-Wege-Ventils 4 der Druck über das ausströmende Gas 6 entspannt. Die Abwärtsbewegung des Kolbens 2 wird nun durch die magnetischen Kräfte zwischen Kontermagnet 10 und dem magnetischem Kolben 2 beschleunigt. Zusätzlich bewirkt je nach Beschaffenheit des Überströmkanals 7 und des Ausströmkanals 13 ein Druckunterschied zwischen Ober- und Unterseite von Kolben 2 eine schnellere Abwärtsbewegung des Kolbens 2. Hat sich während des ersten Messzyklus durch den Kontermagneten 10 ein höherer Druck in der Gasquelle und damit im zuströmenden Gas 5 aufgebaut, bleibt dieses Druckniveau nach Umschalten des 3-Wege-Ventils 4 bis zu nächsten Messzyklus bestehen, wodurch sich der Raum unter dem Kolben 2 im Führungsrohr 1 schneller füllt und der Kolben dadurch schneller steigt. Durch den Überströmkanal 7 kann dieses höhere Druckniveau auf den Auslass 7a wirken, wo es beispielsweise zum Betrieb einer Gassammeleinrichtung benutzt werden kann. Voraussetzung für eine bestimmte Druckhöhe am Auslass 7a ist die Bereitstellung eines mindestens gleich hohen Drucks im zuströmenden Gas 5 durch den Gaserzeuger. Damit erhält das Messsystem durch den Kontermagneten 10 eine Dynamik, die auf steigenden Druck des zuströmenden Gases 5 mit einer Erhöhung der maximal möglichen Messfrequenz reagiert. Die Magnetfeldsensoren 8 und 9, das 3-Wege-Ventil 4 sind wie im Ausführungsbeispiel 1 mit der Auswerteeinheit 17 verbunden.

### Bezugszeichenliste

- 1: Führungsrohr, Messrohr
- 1a: Gaseinlass
- 1b: proximales Ende des Führungsrohrs 1
- 1c: Gasauslass
- 1d: distales Ende des Führungsrohrs 1
- 1e: Achse des Führungsrohrs 1
- 1f: Innenvolumen des Führungsrohrs 1
- 2: Magnetischer Kolben
- 3: Ferrofluid
- 4: 3-Wege-Ventil
- 5: zuströmendes Gas
- 6: ausströmendes Gas
- 7: Überströmkanal
- 7a: Auslass
- 8: Magnetfeldsensor 1
- 9: Magnetfeldsensor 2
- 10: Kontermagnet
- 11: Spritze
- 12: Antrieb mit Wegmessung
- 13: Ausströmkanal
- 14: Druckmessgerät
- 15: bewegliches Überrohr
- 16: Elektromagnet
- 17: Auswerteeinheit
- 100: Gasdurchflussmesser

## Patentansprüche

1. Gasflussmesser (100), zur Bestimmung des Volumens eines von einer Gasquelle gelieferten Gases, aufweisend ein lineares Messrohr (1) mit einem Innenvolumen (1f), mit einem Gaseinlass (1a) an einem proximalen Ende (1b) des Messrohres (1) und mit einem Gasauslass (1c) an einem distalen Ende (1d) des Messrohres (1), mit einem Kolben (2) im Innenvolumen (1f), wobei der Kolben (2) zumindest eine mit dem Messrohr (1) abschließende Gasdichtung (3) aufweist und durch einen Kraftangriff wenigstens zwischen Gaseinlass (1a) und Gasauslass (1c) gasdicht beweglich ist, mit wenigstens einem Schaltmittel (4) zum Steuern der Bewegung des Kolbens (2) in Richtung auf das proximale Ende (1b) des Messrohres (1) und mit mindestens einem Mittel zur zeitlich wiederholten Lageerfassung des Kolbens (2) im Messrohr (1) sowie einer Auswerteeinheit (17), die dazu ausgebildet ist, wenigstens eine Relation zwischen einem Zeitverlauf der Bewegung des Kolbens (2) im Messrohr (1) und der dem Messrohr (1) zugeführte Gasmenge herzustellen und messtechnisch zu bestimmen, wobei
a. das Messrohr (1) aus einem nicht-magnetischen Material gebildet ist,
b. der Kolben (2) gegenüber dem Messrohr (1) ein Untermaß aufweist das mindestens so groß ist, dass der vom Magnetfeldgradienten des Kolbens (2) im Ferrofluid (3) erzeugte Druck ausreicht, um die Adhäsionskräfte zwischen Kolben, Ferrofluid und Messrohr weitgehend zu kompensieren,
c. der Kolben (2) gegenüber dem Messrohr (1) ein Untermaß aufweist das so klein ist, dass für den konzipierten Druckbereich des zumessenden Gases die Dichtheit der zwischen Messrohr (1) und Kolben (2) befindlichen Gasdichtung aus Ferrofluid (3) gegeben ist,
d. das mindestens eine Mittel zur zeitlich wiederholten Lageerfassung des Kolbens (2) wenigstens einen Magnetfeldsensor (8, 9), angeordnet an einer vorbestimmten Stelle des Messrohres (1) umfasst, der wenigstens die Anwesenheit des Kolbens (2) an einer vorbestimmten Stelle des Innenvolumens (1f) anzeigt , und
e. die mit dem Messrohr (1) abschließende Gasdichtung (3) als ein den Kolben (2) umgebendes Ferrofluid ausgebildet ist,
**dadurch gekennzeichnet, dass**
der Kolben (2) permanentmagnetisch mit einem Dipolmoment entlang der Achse (1e) des Messrohres (1) ausgebildet ist,
dass die Dichtung jedoch bei einem Gasdruck außerhalb des konzipierten Druckbereichs vom Gas durchströmt wird , und dass
der Druck des gelieferten Gases konstant gehalten wird, indem ein 3-Wege-Ventil (4) den Druck einer Gasquelle in der einen Schaltstellung zum proximalen Ende (1b) des Messrohres (1) leitet, um den Kolben (2) vom proximalen Ende (1b) weg zu bewegen, und dass die andere Schaltstellung Gaseinlass (1a) , Gasauslass (1c) und Überströmkanal (7) miteinander verbindet, wodurch ein Druckausgleich zwischen dem proximalen Ende (1b) und distalen Ende (1d) des Messrohrs (1) erfolgt und dadurch die Gewichtskraft des Kolbens (2) seine Bewegung zum proximalen Ende (1b) des Messrohres (1) bewirken kann, und die Umschaltungen somit erfolgen können, bevor der Kolben (2) seine mechanischen Endanschläge erreicht.

2. Gasflussmesser, gemäß Anspruch 1, **dadurch gekennzeichnet, dass** das lineare Messrohr (1) so ausgerichtet ist, dass wenigstens eine von Null verschiedene Komponente einer Schwerkraft des Kolbens (2) auf das proximale Ende (1b) des Messrohres gerichtet ist, insbesondere ist das Messrohr (1) vertikal ausgerichtet.

3. Gasflussmesser, gemäß mindestens einem der voranstehenden Ansprüche, **dadurch gekennzeichnet, dass** ein permanentmagnetischer Kontermagnet (10) mit einer magnetischen Polung entgegengesetzt zu einer magnetischen Polung des Kolbens (2) am distalen Ende (1d) des Messrohres (1) verstellbar fest angeordnet ist.

## Claims

1. A gas flow meter (100) for determining the volume of a gas supplied from a gas source, comprising a linear measuring tube (1) having an internal volume (1f), with a gas inlet (1a) at a proximal end (1b) of the measuring tube (1) and with a gas outlet (1c) at a distal end (1d) of the measuring tube (1), with a piston (2) in the inner volume (1f), the piston (2) having at least one gas seal (3) terminating with the measuring tube (1) and being movable in a gas-tight manner at least between the gas inlet (1a) and the gas outlet (1c) by means of a force application, with at least one switching means (4) for controlling the movement of the piston (2) in the direction of the proximal end (1b) of the measuring tube (1) and with at least one means for the time-repeated position detection of the piston (2) in the measuring tube (1) as well as an evaluation unit (17) which is designed to establish and metrologically determine at least one relationship between a time course of the movement of the piston (2) in the measuring tube (1) and the quantity of gas supplied to the measuring tube (1), wherein
a. the measuring tube (1) is formed from a non-magnetic material,
b. the piston (2) has an undersize relative to the measuring tube (1) which is at least so great that the pressure generated by the magnetic field gradient of the piston (2) in the ferrofluid (3) is sufficient to compensate to a large extent for the adhesive forces between the piston, ferrofluid and measuring tube,
c. the piston (2) has an undersize relative to the measuring tube (1) which is so small that the tightness of the gas seal made of ferrofluid (3) located between the measuring tube (1) and piston (2) is given for the designed pressure range of the gas to be measured,
d. the at least one means for time-repeated position detection of the piston (2) comprises at least one magnetic field sensor (8, 9), arranged at a predetermined point of the measuring tube (1), which indicates at least the presence of the piston (2) at a predetermined point of the internal volume (1f), and
e. the gas seal (3) terminating with the measuring tube (1) is formed as a ferrofluid surrounding the piston (2),
**characterised in that**
the piston (2) is permanent magnetic with a dipole moment along the axis (1e) of the measuring tube (1), **in that**, however, the gas flows through the seal at a gas pressure outside the designed pressure range, and that the pressure of the supplied gas is kept constant by a 3-way valve (4) directing the pressure of a gas source to the proximal end (1b) of the measuring tube (1) in one switching position to move the piston (2) away from the proximal end (1b), and that the other switching position connects gas inlet (1a), gas outlet (1c) and overflow channel (7) to each other whereby pressure equalisation occurs between the proximal end (1b) and distal end (1d) of the measuring tube (1), and thereby allowing the weight force of the piston (2) to effect its movement towards the proximal end (1b) of the measuring tube (1), and the switchings can thus occur before the piston (2) reaches its mechanical end stops.

2. Gas flow meter, according to claim 1, **characterised in that** the linear measuring tube (1) is oriented such that at least one non-zero component of a gravitational force of the piston (2) is directed towards the proximal end (1b) of the measuring tube, in particular the measuring tube (1) is oriented vertically.

3. Gas flow meter according to at least one of the preceding claims, **characterized in that** a permanent magnetic counter magnet (10) with a magnetic polarity opposite to a magnetic polarity of the piston (2) is adjustably fixed arranged at the distal end (1d) of the measuring tube (1).

## Revendications

1. Débitmètre de gaz (100) pour déterminer le volume d'un gaz fourni par une source de gaz, comprenant un tube de mesure linéaire (1) avec un volume intérieur (1f), avec une entrée de gaz (1a) à une extrémité proximale (1b) du tube de mesure (1) et avec une sortie de gaz (1c) à une extrémité distale (1d) du tube de mesure (1), avec un piston (2) dans le volume intérieur (1f), le piston (2) présentant au moins un joint (3) d'étanchéité au gaz en relation de fermeture avec le tube de mesure (1) et apte à être déplacé de manière étanche au gaz par une force au moins entre l'entrée de gaz (1a) et la sortie de gaz (1c), avec au moins un moyen de commutation (4) pour commander le mouvement du piston (2) en direction de l'extrémité proximale (1b) du tube de mesure (1) et avec au moins un moyen de détection répétée dans le temps de la position du piston (2) dans le tube de mesure (1) ainsi qu'une unité d'évaluation (17) qui est conçue de façon à établir et à déterminer selon une technique de mesure au moins une relation entre une durée du mouvement du piston (2) dans le tube de mesure (1) et la quantité de gaz introduite dans le tube de mesure (1), dans lequel
a. le tube de mesure (1) est formé d'un matériau non magnétique,
b. le piston (2) présente une dimension inférieure à celle du tube de mesure (1) qui est au moins suffisamment grande pour que la pression générée par le gradient de champ magnétique du piston (2) dans le ferrofluide (3) suffise à compenser largement les forces d'adhérence entre le piston, le ferrofluide et le tube de mesure,
c. le piston (2) présente une dimension inférieure à celle du tube de mesure (1) qui est assez petite pour que, pour la plage de pression conçue du gaz à mesurer, l'étanchéité du joint d'étanchéité au gaz en ferrofluide (3) se trouvant entre le tube de mesure (1) et le piston (2) soit assurée,
d. ledit au moins un moyen de détection de la position du piston (2) répété dans le temps comprend au moins un capteur de champ magnétique (8, 9), agencé à un emplacement prédéterminé du tube de mesure (1), qui indique au moins la présence du piston (2) à un emplacement prédéterminé du volume intérieur (1f), et
e. le joint (3) d'étanchéité au gaz en relation de fermeture avec le tube de mesure (1) est conçu comme un ferrofluide entourant le piston (2),
**caractérisé en ce que**
le piston (2) est réalisé sous forme d'un aimant permanent avec un moment dipolaire selon l'axe (1e) du tube de mesure (1),
le gaz s'écoule toutefois à travers le joint d'étanchéité lorsque la pression du gaz se situe en dehors de la plage de pression prévue, et
la pression du gaz fourni est maintenue constante par le fait qu'une vanne à 3 voies (4) dirige la pression d'une source de gaz dans l'une des positions de commutation vers l'extrémité proximale (1b) du tube de mesure (1) afin d'éloigner le piston (2) de l'extrémité proximale (1b), et **en ce que** l'autre position de commutation relie l'entrée de gaz (1a), la sortie de gaz (1c) et le canal de trop-plein (7), grâce à quoi il est produit un équilibrage de pression entre l'extrémité proximale (1b) et l'extrémité distale (1d) du tube de mesure (1) et par conséquent le poids du piston (2) peut provoquer le déplacement de celui-ci vers l'extrémité proximale (1b) du tube de mesure (1), et la commutation peut donc avoir lieu, avant que le piston (2) n'atteigne ses butées mécaniques.

2. Débitmètre de gaz selon la revendication 1, **caractérisé en ce que** le tube de mesure linéaire (1) est orienté de telle sorte qu'au moins une composante non nulle d'une force de gravité du piston (2) soit dirigée vers l'extrémité proximale (1b) du tube de mesure, le tube de mesure (1) étant en particulier orienté verticalement.

3. Débitmètre de gaz selon au moins l'une des revendications précédentes, **caractérisé en ce qu'**un contre-aimant (10) sous forme d'aimant permanent ayant une polarité magnétique opposée à une polarité magnétique du piston (2) est fixé de manière réglable à l'extrémité distale (1d) du tube de mesure (1).
